# EUROPEAN PATENT SPECIFICATION

(11) **EP 3 718 794 B1**
(45) Date of publication and mention of the grant of the patent: **07.01.2026**
(21) Application number: 18884518.4
(22) Date of filing: 14.08.2018
(51) Int. Cl.: B60C 23/04, B29D 30/00, B60C 19/00

(54) **FUNCTIONAL COMPONENT ATTACHMENT SEAT, FUNCTIONAL COMPONENT, AND TIRE**
BEFESTIGUNGSSITZ FÜR FUNKTIONSBAUTEIL, FUNKTIONSBAUTEIL UND REIFEN
SIÈGE DE FIXATION D'ÉLÉMENT FONCTIONNEL, ÉLÉMENT FONCTIONNEL ET PNEU

(30) Priority: 30.11.2017 JP 2017230092
(43) Date of publication of application: 07.10.2020
(73) Proprietor: Bridgestone Corporation, Tokyo 104-8340 (JP)
(72) Inventor: HANEDA Tomoyuki, Tokyo 104-8340 (JP)
(74) Representative: Marks & Clerk LLP
(86) International application number: PCT/JP2018/030261
(87) International publication number: WO 2019/106893

(56) References cited:
- EP-A1- 2 797 761
- EP-B1- 2 763 860
- EP-B1- 2 797 761
- JP-A- 2002 524 326
- JP-A- 2011 020 557
- JP-A- 2013 103 613
- JP-A- 2013 226 853
- JP-A- 2017 043 343

## Description

### [Technical Field]

The present invention relates to a functional component for attaching to a tire inner surface by using a functional component attachment seat, and relates to a functional component attachment seat and a tire.

### [Background Art]

In a pneumatic tire (hereinafter, merely referred to as tire as needed) mounted to a vehicle or the like, a functional component such as a sensor that measures temperature, inner pressure, or acceleration may be attached to a tire inner surface such as an inner side surface of a tread that contacts a road surface. A functional component attachment seat for attaching the functional component to the tire inner surface is provided in such a tire.

The functional component attachment seat requires sufficient durability against deformation of the tire generated when the tire passes an uneven part on a road and performance for holding the functional component. Thus, a structure having a recessed part to be mated with a protruded part of the functional component with a ring shape, on a bottom surface of the functional component attachment seat has been known (for example, Patent Literature 1).

According to the functional component attachment seat having such a structure, the drop-off of the functional component is prevented and concentration of stress or strain in a specific part is suppressed, and thereby the durability of the functional component attachment seat is enhanced.

### [Citation List]

### [Patent Literature]

[PTL 1] Japanese Unexamined Patent Application Publication No. 2015-160512. Attention is also drawn to the disclosure of EP 2 797 761.

### [Summary of Invention]

In recent years, the functional component such as the sensor described above has been multi-functionalized and downsized. In particular, a size of the sensor (functional component) capable of measuring temperature, inner pressure, and acceleration has been downsized to such an extent of a size of a coin cell, from a viewpoint of weight suppression and resource reduction, and a shape thereof has been simplified.

Further, considering the attaching and detaching of the functional component, it is not preferable that the functional component is completely sealed, and therefore it is preferable that a surface of the functional component with a disc shape such as a coin cell is exposed without being sealed. Thus, it is necessary that the functional component attachment seat has a function of surely attaching the functional component to the tire inner surface with a certain part exposed.

While, in a road on which vehicles are travelling, a road surface may become rough so that an uneven part is generated even if it is a paved road. In particular, when the vehicle passes a so-called pot hole, which is generated the most during a snow melting period in a cold district, large impact (pushing up) force along a tire radial direction is input into the tire. When the large impact force along the tire radial direction is input into the tire, the functional component might be dropped-off easily from the functional component attachment seat or rotated easily in the functional component attachment seat.

Accordingly, an object of the present invention is, in consideration of the problem described above, to provide a functional component which is surely attached to a tire inner surface using a functional component attachment seat without deteriorating a function of the functional component having a small size and a simple shape even if large impact force along a tire radial direction is input into a tire, and to provide the functional component attachment seat and the tire.

An aspect of the present invention is a functional component as claimed in claim 1.

### [Brief Description of Drawings]

[Fig. 1] Fig. 1 is a cross-sectional view of a pneumatic tire 10 along a tire width direction and a tire radial direction.
[Fig. 2] Fig. 2 is a plane view of a functional component attachment seat 100 and a functional component 200.
[Fig. 3] Fig. 3 is an exploded side view of the functional component attachment seat 100 and the functional component 200.
[Fig. 4] Fig. 4 is a plane view of the functional component attachment seat 100.
[Fig. 5] Fig. 5 is a plane view of the functional component 200.
[Fig. 6] Fig. 6 is a side view of the functional component 200 seen in a direction of F6 shown in Fig. 5.
[Fig. 7] Fig. 7 is a plane view of a functional component attachment seat 100A and a functional component 200A according to a modified example which is not according to the present invention, but is useful for understanding the present invention.

### [Description of Embodiments]

Hereinafter, embodiments of the present invention will be described with reference to the drawings. The same reference signs or similar reference signs are assigned to the same functions or the same components and the description thereof is omitted as needed.

### (1) Schematic whole configuration of tire

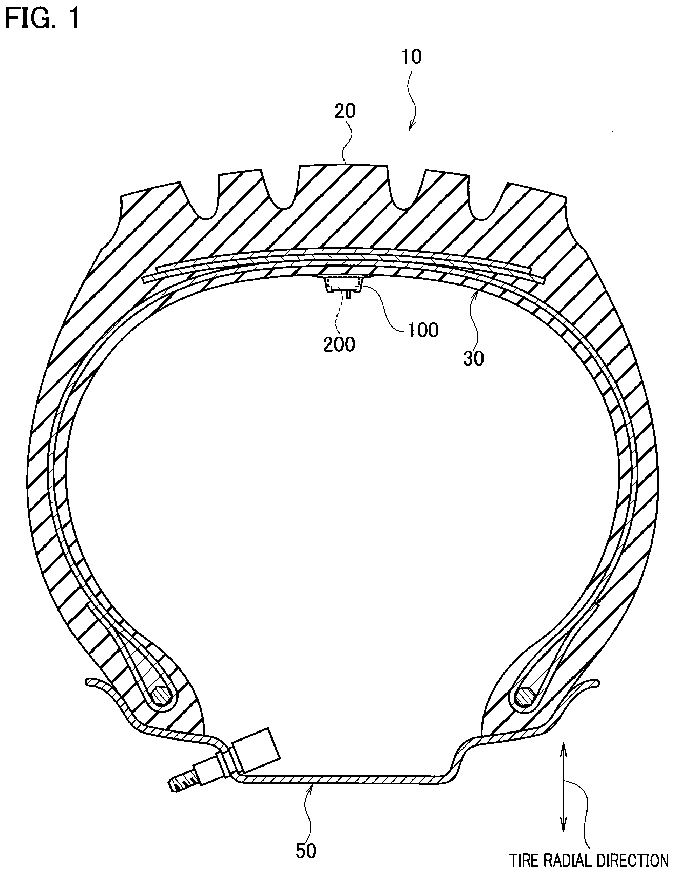

Fig. 1 is a cross-sectional view of a pneumatic tire 10 along a tire width direction and a tire radial direction.

As shown in Fig. 1, the pneumatic tire 10 is used while being mounted to a rim wheel 50. An inner space of the pneumatic tire 10 mounted to the rim wheel 50 is filled with fluid such as air.

A functional component 200 is attached to a back side of a tread 20 that contacts a road surface. Examples of the functional component 200 include a sensor that measures temperature, inner pressure, acceleration or the like, and a wireless communication device (radio equipment).

The functional component 200 is attached to a surface at inner side of the pneumatic tire 10, specifically a tire inner surface 30, via a functional component attachment seat 100. That is, the functional component attachment seat 100 is served as a seat member for attaching the functional component 200 to the tire inner surface 30.

The functional component attachment seat 100 is formed of rubber and fixed to the tire inner surface 30. A method for fixing the functional component attachment seat 100 to the tire inner surface 30 is not especially limited. The functional component attachment seat 100 separately formed may be bonded to the tire inner surface 30 via an adhesive, or if possible, the functional component attachment seat 100 may be integrally formed with the pneumatic tire 10 in vulcanizing. In such a way, the functional component attachment seat 100 is provided in the pneumatic tire 10.

A type of the pneumatic tire 10 is not especially limited, however the present embodiment is applied to a tire mounted to a vehicle such as a passenger vehicle, a truck, and a bus that mainly travel on a general paved road (public road and highway).

### (2) Structure of functional component attachment seat 100 and functional component 200

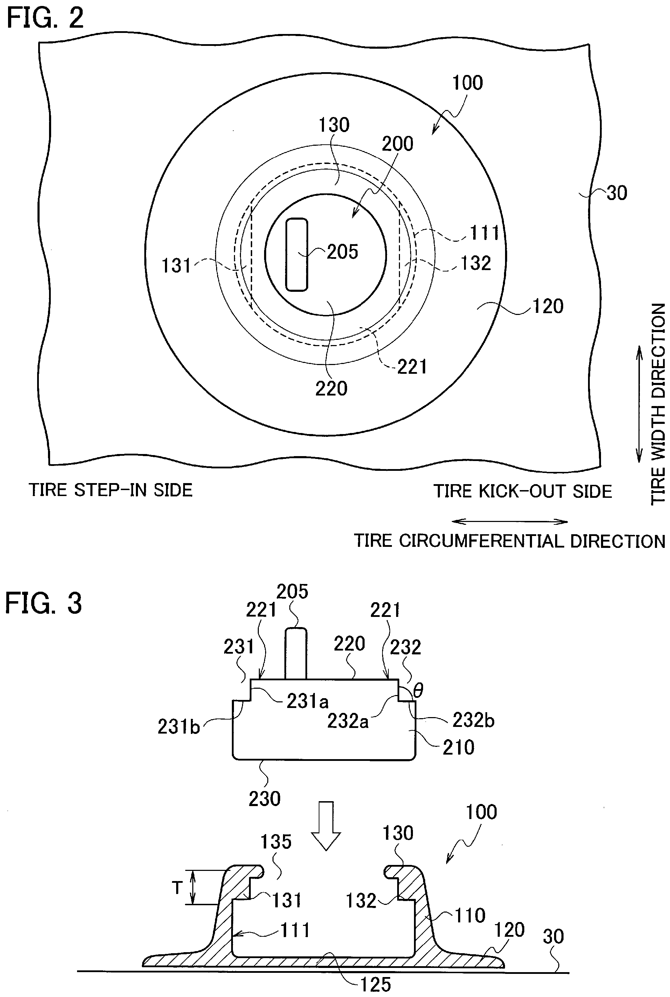

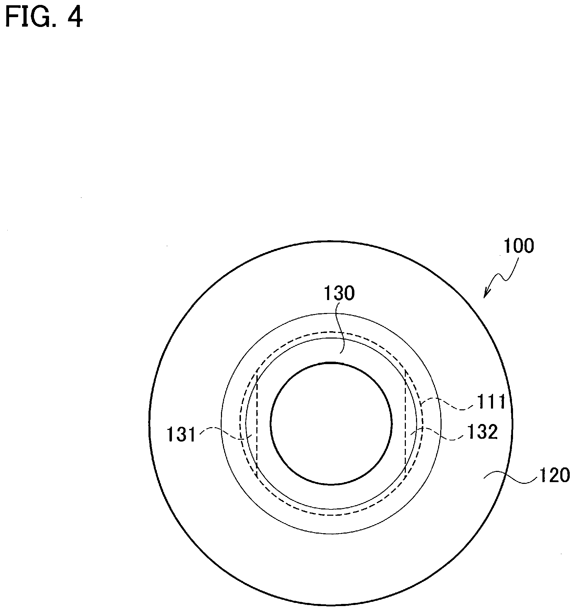

Fig. 2 is a plane view of the functional component attachment seat 100 and the functional component 200. Fig. 3 is an exploded side view of the functional component attachment seat 100 and the functional component 200. In Fig. 3, the functional component attachment seat 100 is shown by a cross-sectional view along the tire width direction and the tire radial direction. Fig. 4 is a plane view of the functional component attachment seat 100.

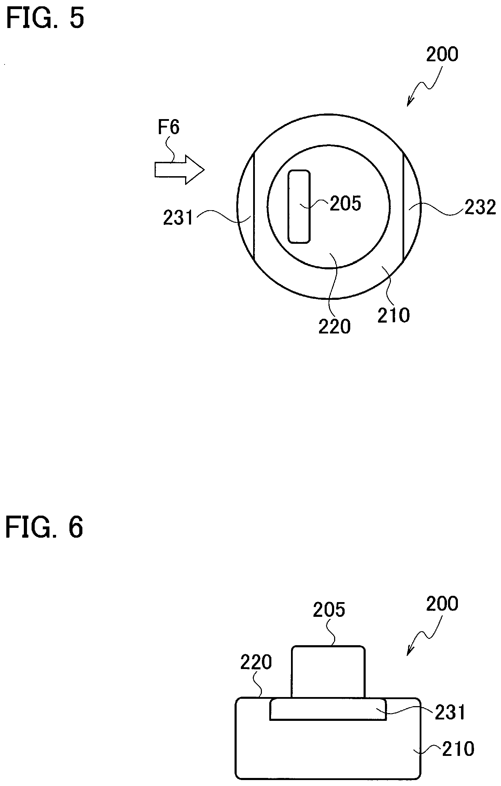

Fig. 5 is a plane view of the functional component 200. Fig. 6 is a side view of the functional component 200 seen in a direction of F6 shown in Fig. 5.

The functional component attachment seat 100 is provided with a surrounding wall 110, a base 120, and a flange 130. An engagement protruded part 131 and an engagement protruded part 132 that are engaged with the functional component 200 are formed in the flange 130. Each of the engagement protruded part 131 and the engagement protruded part 132 is protruded toward an outer side in the tire radial direction.

While, the functional component 200 is provided with a side face 210, an upper face 220, and a bottom face 230. An antenna 205 connected to the wireless communication device is arranged on the upper face 220.

A main body of the functional component 200 except the antenna 205 is formed in a shape similar to that of a coin cell having a certain thickness. That is, a plane shape of the functional component 200 is a circular shape. The main body of the functional component 200 is formed by a cell and a substrate including the sensor, covered with a potting material.

The functional component 200 is pushed into the functional component attachment seat 100 and thereby attached to the functional component attachment seat 100 (see an arrow in Fig. 3). That is, the functional component 200 is detachably attached to the functional component attachment seat 100.

Accordingly, an opening 135 is formed at an inner side of the flange 130 of the functional component attachment seat 100 so that the functional component 200 is inserted therein. The opening 135 is formed to suppress an influence to measurement accuracy (temperature, inner pressure or the like) and a wireless communication function of the functional component 200.

As described above, the functional component attachment seat 100 is formed of rubber. The rubber material forming the functional component attachment seat 100 is not especially limited, and therefore a diene based rubber or a non-diene based rubber may be adopted. In the present embodiment, a 50%-modulus value (stress when 50% of strain is applied) of the functional component attachment seat 100 is equal to 1.4 MPa or less. The 50%-modulus value is measured based on a predetermined measurement method (JIS K6251).

The 50%-modulus value of the functional component attachment seat 100 is preferably set in a range between 1.0-1.4 MPa from a viewpoint of preventing the drop-off of the functional component 200. However, the lower limit thereof is not limited to 1.0 MPa. The lower limit may be slightly lower than 1.0 MPa (for example, 0.8 MPa) in a case in which the holding function and the performance of the functional component 200 are not deteriorated.

The surrounding wall 110 is extended from the base 120 contacting the tire inner surface 30 to an inner side in the tire radial direction. The surrounding wall 110 is formed to surround the side face 210 of the functional component 200. Specifically, the surrounding wall 110 rises from the tire inner surface 30 to the inner side in the tire radial direction.

An inner face 111 of the surrounding wall 110 is formed to contact the functional component 200. The surrounding wall 110 is formed in a circular shape in a plane view except the engagement protruded part 131 and the engagement protruded part 132, so as to surround the side face 210 of the functional component 200. A size in the radial direction of the side face 210 of the functional component 200 is slightly larger than a size in the radial direction of the the inner face 111 of the surrounding wall 110, so that the side face 210 contacts the inner face 111 with certain pressure applied.

The base 120 is formed to contact the tire inner surface 30. The base 120 is also formed in a circular shape in a plane view of the functional component attachment seat 100. A diameter of the base 120 is larger than a diameter of the surrounding wall 110.

Further, a bottom face 125 is formed in the base 120. The bottom face 125 is formed to contact the bottom face 230 of the functional component 200.

The flange 130 is continued to the surrounding wall 110. The flange 130 is formed to lock a peripheral part 221 at the inner side in the tire radial direction of the functional component 200. Specifically, the flange 130 locks the peripheral part 221 of the functional component 200 pushed into the functional component attachment seat 100.

In the present embodiment, a thickness T in the tire radial direction of the flange 130 including the engagement protruded part 131 is equal to 1.5 mm or more. Similarly, the thickness T of the flange 130 including the engagement protruded part 132 is equal to 1.5 mm or more.

The thickness is preferably set in a range between 1.5-2.0 mm from a viewpoint of preventing the drop-off of the functional component 200. However, the upper limit thereof is not limited to 2.0 mm. The upper limit may be slightly larger than 2.0 mm (for example, 2.4 mm) in a case in which the holding function and the attaching and detaching performance of the functional component 200 are not deteriorated.

The engagement protruded part 131 is formed to engage with a notched part 231 formed in the functional component 200. Similarly, the engagement protruded part 132 is formed to engage with a notched part 232 formed in the functional component 200.

In the present embodiment, the engagement protruded part 131 and the engagement protruded part 132 are arranged to face each other so as to form a pair, corresponding to the notched part 231 and the notched part 232.

Specifically, the engagement protruded part 131 and the engagement protruded part 132 are formed to face each other with respect to a center of the functional component 200 having a circular shape in a plane view. That is, the engagement protruded part 131 (notched part 231) is formed at an opposite side to the engagement protruded part 123 (notched part 232).

Further, in the present embodiment, the engagement protruded part 131 and the engagement protruded part 132 (notched part 231 and notched part 232) forming a pair are arranged at a step-in side and a kick-out side of the pneumatic tire 10, respectively. Specifically, the engagement protruded part 131 (notched part 231) is arranged at the step-in side of the pneumatic tire 10. While, the engagement protruded part 132 (notched part 232) is arranged at the kick-out side of the pneumatic tire 10.

The notched part 231 and the notched part 232 are formed on a part of the peripheral part 221 at the inner side in the tire radial direction of the functional component 200. Specifically, at least one pair of the notched part 231 and the notched part 232 facing each other is formed. More specifically, the notched part 231 and the notched part 232 are formed to face each other with respect to the center of the functional component 200 having a circular shape in a plane view.

As described above, in the present embodiment, the notched part 231 and the notched part 232 are arranged at the step-in side and the kick-out side of the pneumatic tire 10, respectively. Each of the notched part 231 and the notched part 232 is extended in the tire width direction.

The notched part 231 is formed by a side part 231a and a flat part 231b. Further, the notched part 232 is formed by a side part 232a and a flat part 232b. That is, each of the notched part 231 and the notched part 232 is a step portion formed on a part of the peripheral part 221 of the functional component 200.

The side part 231a is a flat portion along the tire radial direction of the functional component 200. In the present embodiment, the side part 231a is extended in the tire width direction. The flat part 231b is a flat portion along a direction orthogonal to the tire radial direction of the functional component 200. In the present embodiment, the flat part 231b is extended in the tire width direction.

Similarly, the side part 232a is a flat portion along the tire radial direction of the functional component 200. In the present embodiment, the side part 232a is extended in the tire width direction. The flat part 232b is a flat portion along a direction orthogonal to the tire radial direction of the functional component 200. In the present embodiment, the flat part 232b is extended in the tire width direction.

The engagement protruded part 131 is formed to contact the side part 231a and the flat part 231b. Similarly, the engagement protruded part 132 is formed to contact the side part 232a and the flat part 232b.

In the present embodiment, each of a notched angle θ between the side part 231a and the flat part 231b and a notched angle θ between the side part 232a and the flat part 232b is approximately 90 degrees. Here, the notched angle θ is preferably set to 90 degrees or less. Further, considering the attaching and detaching of the functional component 200 to/from the functional component attachment seat 100, the notched angle θ is preferably set to 45 degrees or more.

### (3) Modified example

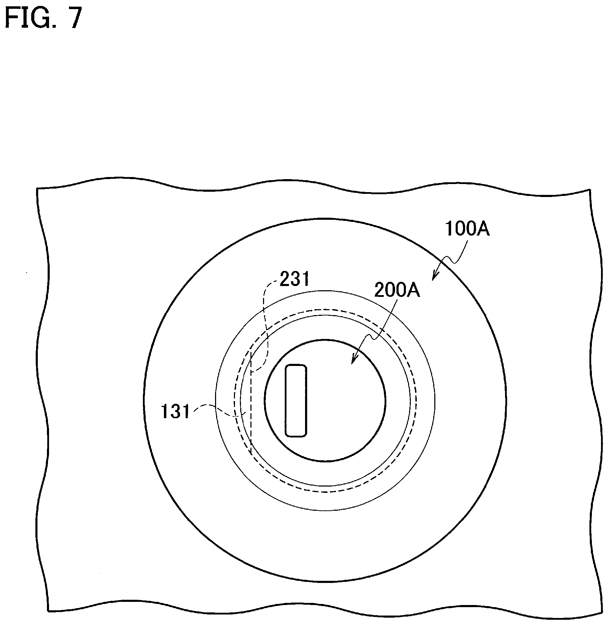

Next, a modified example of the functional component attachment seat 100 will be described. The modified example according to Fig. 7 is not according to the present invention but is provided nevertheless as it is useful for understanding the present invention. Hereinafter, a configuration different from that of the functional component attachment seat 100 is mainly described. Fig. 7 is a plane view of a functional component attachment seat 100A and a functional component 200A according to the modified example.

As shown in Fig. 7, one single engagement protruded part, specifically only the engagement protruded part 131, is formed in the functional component attachment seat 100A. Also, one single notched part, specifically only the notched part 231 formed to engage with the engagement protruded part 131, is formed in the functional component 200A.

In this way, the number of each of the engagement protruded parts formed in the functional component attachment seat and the notched parts formed in the functional component may be one. Or alternatively, the number of the pairs of the engagement protruded part and the notched part to be formed may be three or more.

### (4) Evaluation result

Next, a result of an evaluation test of the functional component attachment seat according to the present embodiment will be described. Specifically, a result of an evaluation test of the functional component attachment seat 100 is described.

In the evaluation test, a rod of which a distal end formed in a round shape is pushed against a center portion of the tread 20 of the pneumatic tire 10 set in the proper air pressure, toward the inner side in the tire radial direction, and then the functional component attached to the functional component attachment seat is measured how much exposed from the functional component attachment seat.

Specifically, as an exposed area of the upper face 220 of the functional component before the evaluation test (area of the upper face 220 visible from the inner side in the tire radial direction) is defined as 100, an exposed ratio of an increase amount of the exposed area of the upper face 220 of the functional component after the evaluation test is measured. That is, as the value of the exposed ratio is larger, the functional component 200 is lifted up and thereby easily dropped-off from the functional component attachment seat.

In a combination of the functional component attachment seat 100 and the functional component 200, the exposed ratio is 0%. While, in a combination of a functional component attachment seat and a functional component (conventional example) without the engagement protruded part (engagement protruded parts 131 and 132) and the notched part (notched parts 231 and 232), the exposed ratio is 54%. In the conventional example, the functional component is moved from the functional component attachment seat toward the inner side in the tire radial direction, and thereby the upper face 220 of the functional component, which is covered with the flange 13, is exposed largely.

### (5) Functions and effects

According to the embodiment described above, the following functions and effects are obtained. Specifically, the functional component attachment seat 100 has the surrounding wall 110 and the flange 130 (functional component attachment seat 100A has the same configuration), and further has the engagement protruded part 131 (engagement protruded part 132) engaged with the notched part 231 (notched part 232) that is formed in a part of the peripheral part 221 of the functional component 200 and that is extended in the tire width direction.

With this, the functional component 200 is held by the functional component attachment seat 100 in a state in which the notched parts 231 and 232 are locked by the engagement protruded parts 131 and 132. Consequently, even if the vehicle passes the pot hole and thereby the large impact (pushing up) force along the tire radial direction is input into the pneumatic tire 10, the functional component 200 can be prevented from being dropped-off or exposed from the functional component attachment seat 100. Also, the functional component 200 can be prevented from being rotated in the functional component attachment seat 100.

That is, according to the functional component attachment seat 100, the functional component 200 can be surely attached to the tire inner surface 30 without deteriorating the function of the functional component 200 having a small size and a simple shape even if the large impact force along the tire radial direction is input into the pneumatic tire 10.

In the present embodiment, the notched part 231 and the notched part 232 are arranged to face each other so as to form a pair. Also, the engagement protruded part 131 and the engagement protruded part 132 are arranged to face each other so as to form a pair, corresponding to the notched part 231 and the notched part 232.

With this, the drop-off and the exposure of the functional component 200 from the functional component attachment seat 100 and the rotation of the functional component 200 in the functional component attachment seat 100 can be further surely prevented.

Specifically, the notched part 231 and the notched part 232 are arranged at the step-in side of the pneumatic tire 10 and the kick-out side of the pneumatic tire 10, respectively. Thus, even if the large impact force is input continuously into a region from the step-in side to the kick-out side of the pneumatic tire 10 in association with the rolling of the pneumatic tire 10, the drop-off and the exposure of the functional component 200 from the functional component attachment seat 100 and the rotation of the functional component 200 in the functional component attachment seat 100 can be further surely prevented.

In the present embodiment, the notched angle θ between the side part 231a (side part 232a) and the flat part 231b (flat part 232b) is equal to 90 degrees or less, and the engagement protruded part 131 (engagement protruded part 132) contacts the side part 231a (side part 232a) and the flat part 231b (flat part 232b).

With this, the engagement protruded part 131 (engagement protrude part 132) contacts the side part 231a (side part 232a) and the flat part 231b (flat part 232b) extended in the tire width direction, so that the functional component 200 is further surely locked by the functional component attachment seat 100. Consequently, the drop-off and the exposure of the functional component 200 from the functional component attachment seat 100 and the rotation of the functional component 200 in the functional component attachment seat 100 can be further surely prevented.

In the present embodiment, the 50%-modulus value of the functional component attachment seat 100 is equal to 1.4 MPa or less. The thickness of the flange 130 in the tire radial direction is equal to 1.5 mm or more.

With this, the functional component attachment seat 100 has proper flexibility, and thereby even if the large impact (pushing up) force along the tire radial direction is input into the pneumatic tire 10, the side face 210, the upper face 220 and the bottom face 230 of the functional component 200 can be surely supported. Further, since the thickness of the flange 130 is equal to 1.5 mm or more, the peripheral part 221 of the functional component 200 is similarly surely supported.

### (6) Other embodiments

As described above, the contents of the present invention are described with reference to the examples, however the present invention is not limited to those descriptions. It is obvious for a person skilled in the art to adopt various modifications and improvement.

For example, in the embodiment described above, the engagement protruded part 131 (engagement protruded part 132) and the notched part 231 (notched part 232) are extended in the tire width direction, however the engagement protruded part 131 (engagement protruded part 132) and the notched part 231 (notched part 232) may be extended in a direction other than the tire width direction, for example a tire circumferential direction. Or alternatively, the engagement protruded part 131 (engagement protruded part 132) and the notched part 231 (notched part 232) may be extended in an intermediate direction between the tire width direction and the tire circumferential direction.

Further, the plane shape of the functional component 200 may not be a circular shape but an oval shape or a rectangular shape.

Further, in the embodiment described above, in the functional component attachment seat 100, the functional component 200 is attached on the back side of the tread 20, however the functional component 200 (and the functional component attachment seat 100) may be attached at a position slightly close to a side wall (buttress or the like), other than the tread 20.

As described above, the embodiments of the present invention are described, however the present invention is not limited to the description and the drawings forming a part of the present disclosure but only to the appended claims. Various modifications, examples, and operation techniques will be apparent from the present disclosure to a person skilled in the art within the scope of the appended claims.

### [Industrial Applicability]

The functional component attachment seat, the functional component and the tire described above are useful to surely attach the functional component to the tire inner surface without deteriorating the function of the functional component having a small size and a simple shape even if the large impact force along the tire radial direction is input into the tire.

### [Reference Signs List]

10: pneumatic tire
20: tread
30: tire inner surface
50: rim wheel
100, 100A: functional component attachment seat
110: surrounding wall
111: inner face
120: base
125: bottom face
130: flange
131, 132: engagement protruded part
135: opening
200: functional component
205: antenna
210: side face
220: upper face
221: peripheral part
230: bottom face
231, 232: notched part
231a, 232a: side part
231b, 232b: flat part

## Claims

1. A functional component (200) configured to be attached to a tire inner surface (30) at an inner side of a tire (10) by using a functional component attachment seat (100), wherein the functional component attachment seat (100) comprises:
a surrounding wall (110) extending from the tire inner surface (30) to the inner side in a tire radial direction to surround a side face (210) of the functional component (200), and
a flange (130) continued to the surrounding wall (110) to lock a peripheral part (221) at the inner side in the tire radial direction of the functional component (200);
the functional component (200) comprising at least one pair of notched parts (231, 232) that is formed in a part of the peripheral part (221) and extends in a tire width direction or a tire circumferential direction,
wherein the at least one pair of the notched parts (231, 232) is formed to be engaged with at least one pair of engagement protruded parts (131, 132) formed in the functional component attachment seat (100),
the at least one pair of the engagement protruded parts (131, 132) being formed to face each other, corresponding to the at least one pair of the notched parts (231, 232) of the functional component (200), and the at least one pair of the notched parts (231, 232) is formed to face each other.

## Patentansprüche

1. Funktionsbauteil (200), das dafür konfiguriert ist, an einer Reifeninnenfläche (30) an einer Innenseite eines Reifens (10) durch Verwenden eines Funktionsbauteil-Befestigungssitzes (100) befestigt zu werden, wobei der Funktionsbauteil-Befestigungssitz (100) Folgendes umfasst:
eine umgebende Wand (110), die sich von der Reifeninnenfläche (30) bis zu der in einer Reifenradialrichtung inneren Seite erstreckt, um eine Seitenfläche (210) des Funktionsbauteils (200) zu umschließen, und
einen Flansch (130), der bis zur umgebenden Wand (110) fortgesetzt ist, um ein peripheres Teil (221) an der in der Reifenradialrichtung inneren Seite des Funktionsbauteils (200) zu arretieren;
wobei das Funktionsbauteil (200), mindestens ein Paar von gekerbten Teilen (231, 232) umfasst, das in einem Teil des peripheren Teils (221) ausgebildet ist und sich in einer Reifenbreitenrichtung oder einer Reifenumfangsrichtung erstreckt,
wobei das mindestens eine Paar der gekerbten Teile (231, 232) dafür ausgebildet ist, dass es mit mindestens einem Paar von Eingriffsvorsprungsteilen (131, 132), die im Funktionsbauteil-Befestigungssitz (100) ausgebildet sind, in Eingriff gebracht zu werden,
wobei das mindestens eine Paar von Eingriffsvorsprungsteilen (131, 132) so ausgebildet ist, dass sie einander zugewandt sind, entsprechend dem mindestens einen Paar der gekerbten Teile (231, 232) des Funktionsbauteils (200), und das mindestens eine Paar der gekerbten Teile (231, 232) so ausgebildet ist, dass sie einander zugewandt sind.

## Revendications

1. Élément fonctionnel (200) configuré pour être fixé à une surface intérieure de pneu (30) sur un côté intérieur d'un pneu (10) à l'aide d'un siège de fixation d'élément fonctionnel (100), dans lequel le siège de fixation d'élément fonctionnel (100) comprend :
une paroi périphérique (110) s'étendant de la surface intérieure de pneu (30) jusqu'au côté intérieur dans une direction radiale de pneu pour entourer une face latérale (210) de l'élément fonctionnel (200), et
une bride (130) se prolongeant jusqu'à la paroi périphérique (110) pour verrouiller une partie périphérique (221) du côté intérieur dans la direction radiale de pneu de l'élément fonctionnel (200) ;
l'élément fonctionnel (200) comprenant au moins une paire de parties crantées (231, 232) qui est formé dans une partie de la partie périphérique (221) et s'étend dans le sens de largeur de pneu ou dans le sens circonférentiel de pneu,
dans lequel la au moins une paire de parties crantées (231, 232) est formée pour se mettre en prise avec au moins une paire de parties saillantes de mise en prise (131, 132) formées dans le siège de fixation d'élément fonctionnel (100),
la au moins une paire de parties saillantes de mise en prise (131, 132) étant formées pour se faire face, correspondant à la au moins une paire de parties crantées (231, 232) de l'élément fonctionnel (200), et la au moins une paire de parties crantées (231, 232) sont formées pour se faire face.
